# FASCICULE DE BREVET EUROPEEN

(11) **EP 0 476 024 B1**
(45) Date de publication et mention de la délivrance du brevet: **19.05.1993**
(21) Numéro de dépôt: 90909449.2
(22) Date de dépôt: 07.06.1990
(51) Int. Cl.: G02B 6/38

(54) **CONNECTEUR POUR FIBRES OPTIQUES**
VERBINDUNG FÜR GLASFASERN
OPTICAL FIBRE CONNECTOR

(30) Priorité: 08.06.1989 FR 8907596
(43) Date de publication de la demande: 25.03.1992
(73) Titulaire: COMMISSARIAT A L'ENERGIE ATOMIQUE, 75015 Paris (FR)
(72) Inventeur: BLANC, Floréal, F-91370 Verrières-le-Buisson (FR); MONGIN, Roger, F-75012 Paris (FR); PHILIP, Thierry, F-30200 Bagnols-sur-Cèze (FR)
(74) Mandataire: Mongrédien, André
(86) Numéro de dépôt international: FR9000402
(87) Numéro de publication internationale: WO9015350

(56) Documents cités:
- EP-A- 0 166 636
- EP-A- 0 258 964
- WO-A-84/00617
- FR-A- 2 588 387

## Description

L'invention se rapporte 4 un connecteur pour extrémité de câble à fibres optiques, du genre se composant d'une fiche destinée à être fixée à l'extrémité dudit câble et d'un raccord d'accouplement comportant un manchon, la fiche étant destinée à être engagée dans le manchon quand une connexion est établie, la fiche comportant :
- un barillet auquel les fibres optiques dudit câble sont destinées à aboutir par leurs extrémités ;
- un porte-barillet de forme générale tubulaire enveloppant un espace longitudinal interne débouchant à son avant sur un logement pour recevoir le barillet, ledit barillet étant introductible dans le logement par l'avant du porte-barillet de façon à s'appuyer par son arrière sur le porte-barillet ; ladite fiche étant engageable dans le manchon du raccord d'accouplement par l'intermédiaire de l'avant dudit porte-barillet ;
- un coulisseau muni de moyens d'attache des porteurs éléments de traction dudit câble optique contenant les fibres optiques, le coulisseau étant destiné à être monté longitudinalement déplaçable dans l'espace longitudinal interne et introductible dans ledit espace interne par l'arrière du porte-barillet ;
- des moyens permettant de mettre en butée le coulisseau et le porte-barillet à la suite d'un déplacement du coulisseau vers l'avant dans le porte-barillet ;
- et un moyen de blocage du coulisseau dans le porte-barillet lorsque le coulisseau et le porte-barillet sont en butée.

Le brevet EP-A-0 258 964 décrit un connecteur qui est agencé de cette façon.

Les connecteurs pour fibres optiques présentent par rapport aux connecteurs électriques une structure plus compliquée provenant de la nécessité d'aligner et de mettre en prolongement exact les fibres appartenant à des câbles différents sans jamais imposer de courbure excessive aux fibres.

Dans le brevet français 2 473 733, le connecteur comprend, établis sur l'extrémité des câbles, d'une part un barillet porteur des extrémités des fibres et soutenu par un porte-barillet qui protège les fibres près de leur extrémité, à un endroit où elles ne sont pas maintenues par le câble, et d'autre part un système de verrouillage constitué d'une douille filetée entourant chacun des porte-barillets. La connexion est établie en plaçant les faces terminales planes des barillets en butée l'une sur l'autre sur un raccord d'accouplement après avoir fait coïncider deux réseaux de pions de positionnement et de centrage et d'évidements complémentaires établis sur les deux barillets de manière à obtenir un alignement correct, puis en vissant sur le raccord d'accouplement les douilles filetées qui s'appuient sur des épaulements des porte-barillets et empêchent leur disjonction.

Un problème important dans le genre de connecteurs tels que mentionnés ci-dessus, à savoir le montage traditionnellement difficile des extrémités des fibres optiques sur le barillet au moment de la fabricaton de l'extrémité du câble, a été résolu grâce à la présente invention.

L'invention est caractérisé en ce que les moyens de mettre en butée le coulisseau et le porte-barillet sont agencés de sorte que la butée est à position variable et qu'elle permet ainsi d'amener le coulisseau, respectivement, dans une première position longitudinale avancée dans laquelle les extrémités des fibres optiques sortent du porte-barillet par l'avant et dans une seconde position longitudinale en retrait de la première dans laquelle les fibres optiques sont tirées en arrière et amènent le barillet dans son logement, et en ce que le moyen de blocage est destiné à agir lorsque le coulisseau est dans ladite seconde position de butée en retrait.

Selon l'invention, les moyens de liaison par butée peuvent comprendre un écrou engagé par filetage soit sur le coulisseau, soit sur le porte-barillet, et venant buter sur l'autre de ces piéces. Le coulisseau peut quant à lui comporter en tant que moyens d'attache des porteurs du câble optique solidaires du coulisseau, un système d'accrochage constitué de deux piéces mutuellement mobiles munies de surfaces coniques de coincement.

Le brevet WO-A-84/00617 décrit un connecteur où le barillet est monté sur les fibres avant d'être introduit dans le porte-barillet. Il s'agit d'un genre différent de connecteur où le barillet est introduit par l'arrière du porte-barillet.

Le connecteur du brevet français 2 473 733 ne peut être manipulé que manuellement. La nécessité de devoir établir des connexions de fibres optiques par télémanipulation avec des outils aux possibilités limitées, tout en continuant à respecter des tolérances très strictes de positionnement de l'extrémité des fibres, peut imposer une construction particulière du connecteur.

Le connecteur selon l'invention est muni en particulier, pour autoriser une télémanipulation aisée, d'une pièce de manipulation de forme essentiellement tubulaire qui entoure le porte-barillet et est mobile par rapport à lui suivant certaines conditions. Cette pièce de manipulation est saisie par l'outil et peut être verrouillée à un raccord d'accouplement par l'intermédiaire d'une liaison à baïonnette.

Ce connecteur comprend alors : une pièce destinée à être manipulée disposée autour du porte-barillet, mobile en translation par rapport au porte-barillet suivant l'axe de fiche, des moyens de postionnement angulaire entre le raccord d'accouplement et le porte-barillet, destinés à empêcher le porte-barillet de tourner par rapport au raccord d'accouplement autour de l'axe de fiche ; des surfaces de butée sur le porte-barillet et le raccord d'accouplement suivant l'axe de fiche, un moyen de liaisn entre la pièce manipulée et le porte-barillet pour empêcher la rotation de la pièce manipulée autour de l'axe de fiche lorsque la connexion n'est pas établie et pour autoriser cette rotation lorsqe la connexion s'établit, et des moyens de verrouillage à baïonnette conjointement disposés sur la pièce manipulée et le raccord d'accouplement et respectivement constitués de tenons et de rainures ainsi que d'un ressort disposé entre le porte-barillet et la pièce manipulée et tendant à déplacer la pièce manipulée suivant l'axe de fiche en l'éloignant du barillet. Une telle disposition existe dans le connecteur décrit dans le brevet européen 0 297 439.

Il est intéressant de protéger le barillet de chocs ou de salissures. C'est pourquoi la fiche peut en outre comprendre un fourreau tubulaire disposé autour d'une extrémité du porte-barillet et monté coulissant suivant l'axe longitudinal de la fiche, ainsi qu'un ressort disposé entre le porte-barillet et le fourreau et tendant à repousser le fourreau vers l'avant, dans une position où il couvre le barillet.

On va maintenant passer à la description detaillée d'une réalisation concrète de l'invention au moyen des figures suivantes annexées à titre illustratif et non limitatif :
- la figure 1 représente schématiquement les deux ensembles de piéces à connecter avant l'établissement de la connexion ;
- la figure 2 représente une coupe longitudinale des deux piéces à l'état connecté ;
- la figure 3 est une vue éclatée en perspective qui détaille les moyens de connexion mis en oeuvre ;
- les figures 4 et 5 sont des agrandissements de deux parties complémentaires de la figure 2 et représentent d'autres détails du connecteur ; et
- la figure 6 représente une réalisation particulière d'un mécanisme à baïonnette.

### Description de la réalisation préférée de l'invention

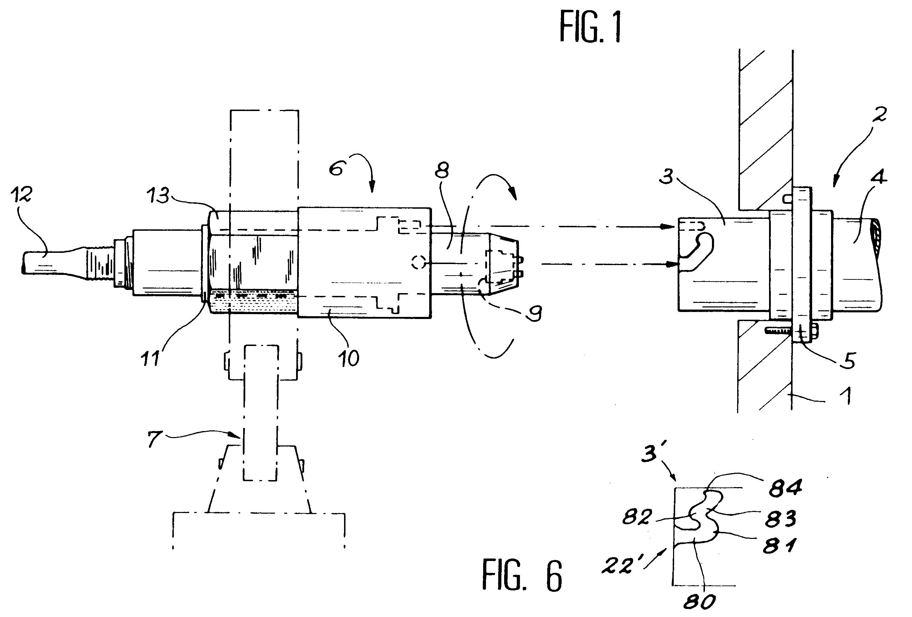

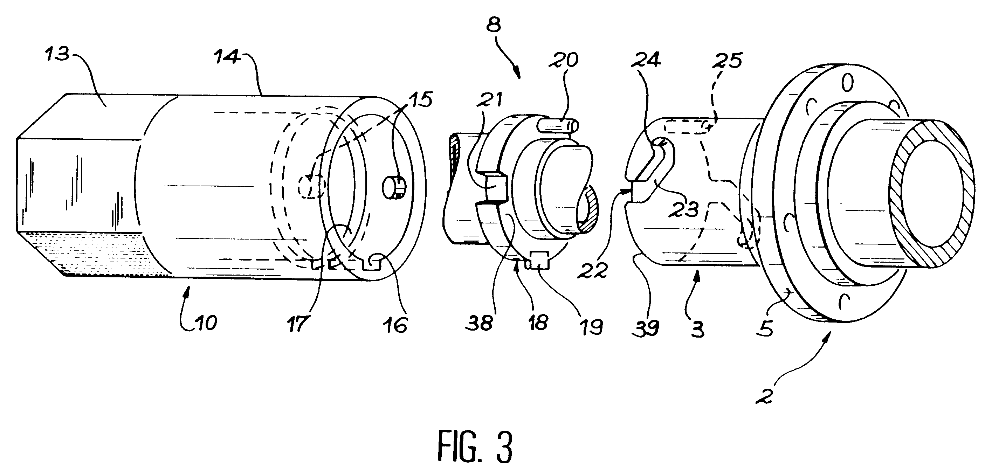

Les figures 1 et 3 notamment dévoilent comment assembler le connecteur. Celui-ci comprend, fixé (ou vissé) à un panneau 1 ou à un support analogue, un raccord d'accouplement 2 de forme cylindrique et présentant deux manchons 3 et 4 coaxiaux qui se situent de part et d'autre du panneau 1 et une bride médiane 5 d'attache au panneau 1. Il comprend également une fiche 6 d'extrémité de câble, portée par un outil de télémanipulation 7 à pince non représenté en détail, qui doit être engagée dans un des manchons 3.

La fiche 6 comporte un barillet 9 soutenu par un porte-barillet 8 qui protège les fibres entre l'accrochage du câble et le barillet 9 auquel elles aboutissent.

Un écrou 10 télémanipulable entoure le porte-barillet 8 et un anneau élastique 11, établi sur une gorge du porte-barillet 8, l'empêche de glisser le long du câble 12 contenant les fibres optiques.

L'écrou 10 est représenté plus en détail sur la figure 3 : il comprend une partie arrière à six pans 13 saisie par l'outil de télémanipulation 7 et une partie avant 14 plus large, à section circulaire creuse et portant sur sa face inférieure deux tenons 15, une rainure axiale 16 et une gorge circonférentielle 17 à l'arrière des tenons 15 et sur laquelle l'extrémité arrière de la rainure axiale 16 débouche. On représente également une partie du porte-barillet 8 dont la face externe porte une bordure circonférentielle 18 elle-même porteuse d'une excroissance en clavette 19 et d'un doigt 20 pointant vers l'avant. La bordure 18 est interrompue par deux entailles 21 diamétralement opposées sur le porte-barillet 8 et dont une seule apparaît.

La paroi du manchon 3 comporte deux rainures arquées 22 composées d'une zone oblique 23 qui s'étend jusqu'à l'extrémité arrière du manchon 3 et que prolonge une zone de verrouillage 24 en décrochement vers l'arrière. Un perçage 25 longitudinal est également établi sur la paroi du manchon 3.

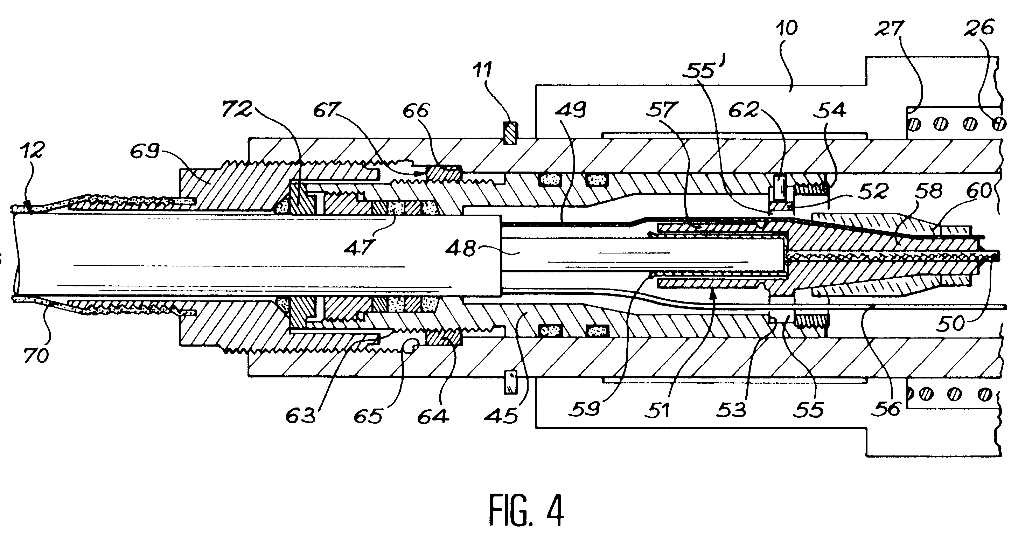

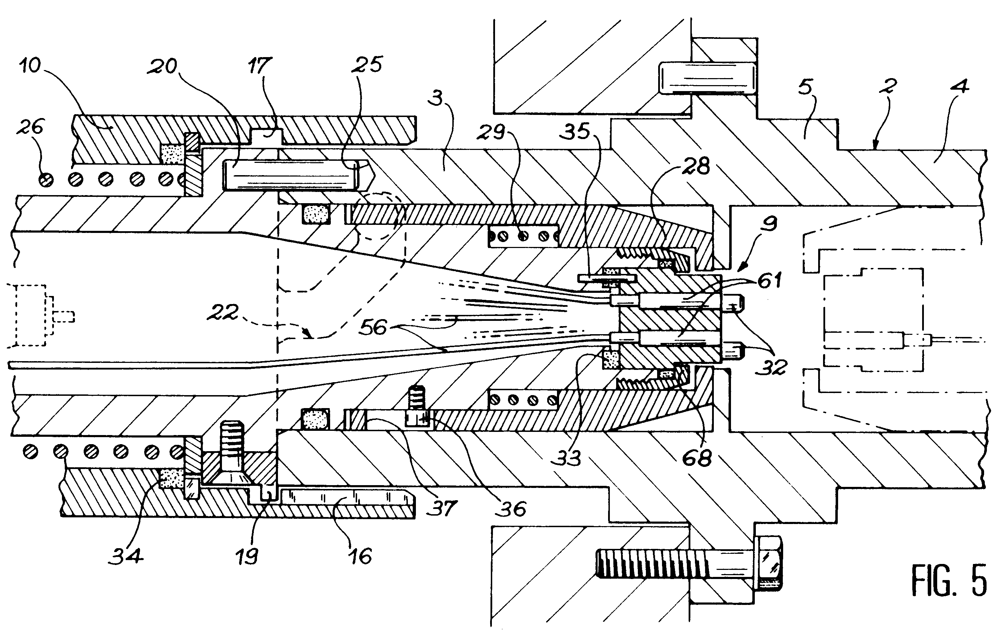

Quand la connexion entre le raccord d'accouplement 2 et la fiche 6 n'est pas établie, un ressort 26 représenté figures 4 et 5 est comprimé entre la bordure 18 et un épaulement 27 établi à l'arrière de l'écrou 10 sur sa face interne ; il repousse l'écrou 10 en appui sur l'anneau élastique 11 de sorte que l'avant du porte-barillet 8 dépasse de l'écrou 10.

La première étape de la connexion consiste à faire pénétrer le doigt 20 dans le perçage 25. L'effort de l'outil 7 en appui sur la partie avant 14 déplace ensuite, en comprimant le ressort 26, l'écrou 10 le long du porte-barillet 8 quand la bordure 18 est entrée en butée par sa face avant 38 contre la face arrière 39 de la paroi du manchon 3 : la rainure 16 glisse sur la clavette 19, la paroi interne de la partie avant 14 glisse sur la bordure 18 et la paroi du manchon 3, et les tenons 15 passent ensuite dans les entailles 21 puis dans les rainures arquées 22. La clavette 19 est à ce moment engagée dans la gorge circonférentielle 17, c'est-à-dire qu'un mouvement de rotation de l'écrou 10 devient possible sans tourner le porte-barillet 8. Les tenons 15 pénètrent ainsi jusqu'au fond des rainures arquées 22. Quand l'outil 7 est retiré, le ressort 26 plaque la bordure 18 contre l'extrémité arrière 39 de la paroi du manchon 3 et maintient les tenons 15 dans les zones en décrochement 24.

La déconnexion se fait assez simplement : l'outil 7 est remis en place puis un effort est exercé vers l'avant sur l'écrou 10 de manière à dégager les tenons 15 des zones de verrouillage 24. Une rotation de l'écrou 10 accompagnée d'un mouvement vers l'arrière fait ensuite passer les tenons 15 le long des zones obliques 23 puis des entailles 21. Quand le contact avec l'anneau élastique 11 est rétabli, le porte-barillet 8 est retiré du manchon 3 et le fourreau 28 masque le barillet 9.

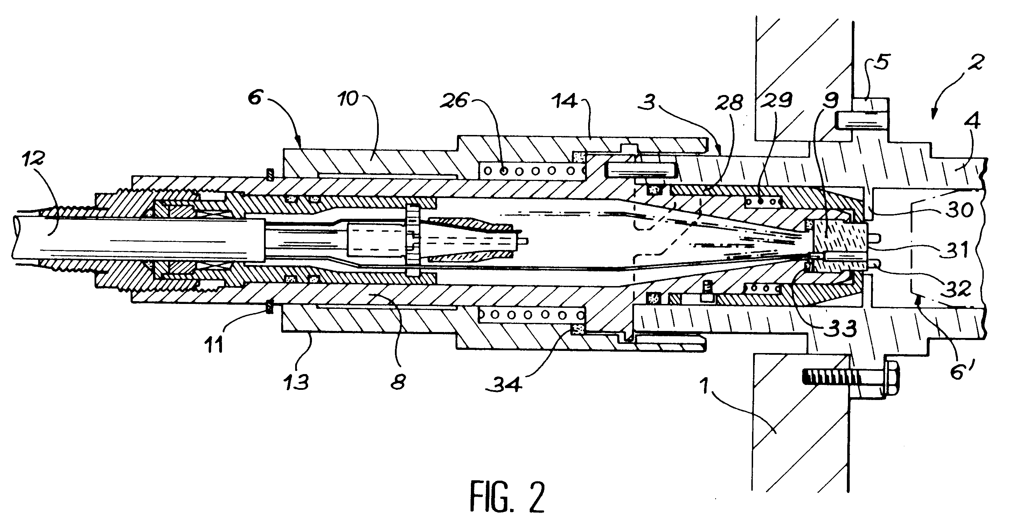

La figure 2, et surtout ses agrandissements constitués par les figures 4 et 5, montrent encore d'autres détails du connecteur à l'état connecté.

L'extrémité avant du porte-barillet 8 est ainsi entourée d'un fourreau 28 de protection du barillet 9. Un ressort 29, comprimé entre un épaulement du porte-barillet 8 et le fourreau 28, repousse ce dernier vers l'avant. A l'état connecté, le fourreau 28 bute contre une crête de séparation 30 établie à la limite des parois internes des manchons 3 et 4 et qui est évidée en son centre. Le fourreau 28 est ainsi maintenu en retrait de la face avant du barillet 9. Le barillet 9 est prévu pour entrer en contact avec le barillet d'une fiche mobile complémentaire 6' engagée dans l'autre manchon 4 et représentée partiellement en traits mixtes dans une position légèrement rétractée. A cet effet, les barillets 9 sont munis d'une face avant plane 31 et de pions 32 jumelés avec des perçages correspondants établis sur l'autre barillet. On garantit ainsi que les extrémités des fibres optiques 56 des deux barillets viennent face à face. Chaque barillet 9 s'appuie à l'arrière sur un porte-barillet 8 par une rondelle élastique 33 qui garantit un montage suffisamment souple du barillet 9 et, à l'état connecté, le porte-barillet 8 s'appuie sur l'écrou 10 par une autre rondelle élastique 34 dont l'élasticité permet d'avancer l'écrou 10 pour dégager les tenons 15 des zones de verrouillage 24. Une goupille 35 empêche de tourner le barillet 9 par rapport au porte-barillet 8.

Deux vis 36 -dont une seule apparaît sur le dessin- engagées sur la surface extérieure du porte-barillet 8 dépassent de celle-ci dans deux rainures axiales 37 du fourreau de protection 28 ; elles servent de butée et empêchent de désolidariser le fourreau de protection 28.

On constate ainsi que la connexion par télémanipulation du raccord d'accouplement 2 et de la fiche 6 est aisée en ayant recours à l'invention. Le doigt 20 et le perçage 25 garantissent tout d'abord une position angulaire correcte du barillet 9. Le doigt 20 est caché par l'écrou 10, mais il suffit de munir ce dernier d'un repère ou d'un signe quelconque pour évaluer la position du doigt 20 puisque la clavette 19 est alors engagée dans la rainure axiale 16.

La clavette 19 permet encore de guider les tenons 15 à travers les entailles 21, après quoi les rainures arquées 22 guident les tenons 15 jusqu'à la zone de verrouillage 24. Il suffit alors d'enlever l'outil 7 pour que l'écrou 10 reste bloqué et plaque la bordure 18 contre le manchon 3.

Ce connecteur est particulier en ce sens qu'il permet une mise en place facile des fibres optiques 56 dans le porte-barillet 8 et le barillet 9, tout en permettant de minimiser les contraintes de courbure sur les fibres.

Un coulisseau 45 de forme tubulaire est en effet introduit par l'arrière dans le porte-barillet 8. L'extrémité du câble optique 12 est engagée par l'arrière dans le coulisseau 45 où elle est ensuite accrochée à l'aide de ce qu'on appelle les porteurs du câble 12, c'est-à-dire les éléments filiformes gainés qui servent à le renforcer. La réalisation décrite utilise ainsi un porteur central 48 de section relativement importante terminé par une extrémité amincie 50, et entouré de porteurs périphériques 49 plus fins.

Une pièce d'accrochage 51, prévue pour être introduite par l'avant dans le coulisseau 45, comprend tout d'abord une collerette 52 serrée entre un épaulement 53 du coulisseau 45 et une bague de serrage 54 filetée et vissée sur un taraudage à l'avant du coulisseau 45. La collerette 52 est pourvue de perçages 55' destinés au passage des porteurs périphériques 49 et d'évidements 55 destinés au passage des fibres optiques 56. La pièce d'accrochage 51 comporte, outre la collerette 52, un étui 57 dirigé vers l'arrière et un manchon conique 58 dirigé vers l'avant.

L'étui 57 est utilisé pour sertir le porteur central 48 dont une partie des brins constituants a été préalablement retroussée sur un tube 59. L'extrémité amincie 50 s'étend à l'intérieur d'un perçage établi dans l'axe du manchon conique 58 dont il dépasse partiellement à l'avant et auquel il est collé à cet endroit. Les porteurs périphériques 49 sont ensuite recourbés pour venir en contact du manchon conique 58 et maintenus contre celui-ci à l'aide d'un écrou de serrage conique 60 enfilé autour du manchon conique 58 de manière à réaliser un coincement par serrage de l'écrou 60.

Les fibres optiques 56 sont donc introduites à travers les évidements 55 de la pièce d'accrochage 51 et s'étendent dans un espace enveloppé par le porte-barillet 8. Des joints toriques 47 sont alors serrés entre le câble 12 et le coulisseau 45 pour prévenir l'arrachement accidentel du câble 12.

L'introduction correcte des embouts 61 à l'extrémité des fibres optiques 56 dans le barillet 9 soulève de nombreux problèmes dans l'art antérieur, où les embouts 61 dépassent à peine du porte-barillet 8 et sont donc peu accessibles. L'enfoncement du barillet 9 vers l'arrière fait courir le risque que des embouts 61 ne pénètrent pas dans les perçages du barillet 9 qui leur sont réservés, ce qui peut détériorer les fibres optiques 56 en les recourbant excessivement.

C'est pourquoi le coulisseau 45 est muni à l'arrière d'une surface filetée 63 sur laquelle est enfilé un écrou 64 cylindrique dont le diamètre extérieur est presque égal, avec seulement un léger jeu, au diamètre d'une zone 65 de la paroi interne du porte-barillet 8 terminée par un épaulement 66 vers l'avant. L'écrou 64 ainsi déplaçable sur la surface filetée 63 constitue donc en coopération avec l'épaulement 66 une butée à position variable.

L'introduction du coulisseau 45 dans le porte-barillet 8, qui suit immédiatement le montage décrit ci-dessus du câble optique 12 dans le coulisseau 45, s'effectue alors que l'écrou 64 est tout à l'arrière de la partie filetée 63. Lorsque l'écrou 64 bute contre l'épaulement 66, les embouts 61 et le barillet 9 sont sortis du porte-barillet 8 vers l'avant. Il est alors facile de les introduire dans les perçages du barillet 9, après quoi l'écrou 64 est tourné tout en s'opposant à la rotation du coulisseau 45. Pour cela, l'écrou 64 est muni d'encoches 67 dans lesquelles on introduit par l'arrière du porte-barillet 8 un outil spécial à tenons.

Le coulisseau 45 est petit à petit déplacé vers l'arrière et le barillet 9, tiré par les fibres optiques 56 et leurs embouts 61, s'enfonce dans le logement qui a été prévu à l'avant du porte-barillet 8 jusqu'à toucher la rondelle élastique 33. Un rebord de retenue 68 est alors vissé sur le porte-barillet 8 pour empêcher l'extraction du barillet 9. Une bague filetée 69 entourant le câble 12 est vissée à l'arrière du porte-barillet 8 jusqu'à buter par l'intermédiaire de la bague 72 contre l'extrémité arrière du coulisseau 45 qui est alors bloqué. En fin de montage, une gaine 70 est thermorétractée sur le câble 12 et sur les cannelures de la pièce 69.

Divers joints d'étanchéité illustrés sur les figures assurent une liaison étanche des constituants du connecteur.

La figure 6 représente une construction particulière du manchon, référencée 3', qui se distingue de la précédente par des rainures 22' de forme spécialement adaptée aux outils de télémanipulation. Ces rainures 22' comprennent, à partir du bord du manchon 3', par lequel le porte-barillet 8 est introduit, une partie rectiligne 80 suivant l'axe du manchon, une petite partie arquée 81 sensiblement circonférentielle, un creux de reprise 82, une grande partie arquée 83 sensiblement circonférentielle et un creux d'encliquetage 84.

Quand l'engagement du porte-barillet 8 est effectué, le parcours des tenons 15 dans les rainures 22' impose de déplacer l'outil de télémanipulation 7 d'un mouvement qui est d'abord purement axial, puis d'une légère rotation qui place les tenons 15 dans les creux de reprise 82. L'élasticité du ressort 26 maintient la fiche 6 dans la position atteinte, ce qui permet de relâcher temporairement l'outil de télémanipulation 7 avant de reprendre la fiche 6 pour déplacer l'outil de télémanipulation d'un mouvement de rotation presque pur et amener les tenons 15 dans les creux d'encliquetage 84. Les creux 82 et 84 s'étendent depuis les parties des rainures 22' sur lesquelles ils sont disposés vers le bord du manchon 3'.

Le découplage presque parfait des mouvements qui est ainsi obtenu facilite la connexion.

## Revendications

1. Connecteur pour extrémité de câble à fibres optiques, composé d'une fiche (6) destinée à être fixée à l'extrémité dudit câble (12) et d'un raccord d'accouplement (2) comportant un manchon (3), la fiche (6) étant destinée à être engagée dans le manchon (3) quand une connexion est établie, la fiche comportant :
- un barillet (9) auquel les fibres optiques (56) dudit câble (12) sont destinées à aboutir par leurs extrémités ;
- un porte-barillet (8) de forme générale tubulaire enveloppant un espace longitudinal interne débouchant à son avant sur un logement pour recevoir le barillet, ledit barillet (9) étant introductible dans le logement par l'avant du porte-barillet de façon à s'appuyer par son arrière sur le porte-barillet ; ladite fiche étant engageable dans le manchon du raccord d'accouplement par l'intermédiaire de l'avant dudit porte-barillet ;
- un coulisseau (45) muni de moyens d'attache (58, 60) des porteurs (48, 49), éléments de traction dudit câble optique (12) contenant les fibres optiques (56), le coulisseau (45) étant destiné à être monté longitudinalement déplaçable dans l'espace longitudinal interne et introductible dans ledit espace interne par l'arrière du porte-barillet (8) ;
- des moyens permettant de mettre en butée le coulisseau (45) et le porte-barillet (8) à la suite d'un déplacement du coulisseau (45) vers l'avant dans le porte-barillet (8) ;
- et un moyen de blocage du coulisseau (45) dans le porte-barillet (8) lorsque le coulisseau (45) et le porte-barillet (8) sont en butée ;
caractérisé en ce que les moyens de mettre en butée le coulisseau (45) et le porte-barillet (8) sont agencés de sorte que la butée est à position variable et qu'elle permet ainsi d'amener le coulisseau, respectivement, dans une première position longitudinale avancée dans laquelle les extrémités des fibres optiques sortent du porte-barillet par l'avant et dans une seconde position longitudinale en retrait de la première dans laquelle les fibres optiques sont tirées en arrière et amènent le barillet (9) dans son logement, et en ce que le moyen de blocage est destiné à agir lorsque le coulisseau est dans ladite seconde position de butée en retrait.

2. Connecteur pour câble à fibres optiques selon la revendication 1, caractérisé en ce que les moyens de mettre en butée consistent en un écrou (64) engagé par filetage soit sur le coulisseau (45) soit sur le porte-barillet (8), et en un épaulement (66) établi soit sur le porte-barillet (8) soit sur le coulisseau (45) et qui vient buter sur l'écrou (64), l'écrou étant muni de moyens (67) permettant de le tourner par un outil introduit par l'arrière du porte-barillet.

3. Connecteur pour câble à fibres optiques selon l'une quelconque des revendications 1 ou 2, caractérisé en ce que les moyens d'attache des porteurs (49) du câble optique (12) solidaires du coulisseau sont constitués par un système d'accrochage se composant de deux pièces mutuellement mobiles (58, 60) munies de surfaces coniques de coincement.

4. Connecteur pour câble à fibres optiques selon l'une quelconque des revendications 1 à 3, caractérisé en ce que la fiche comprend en outre un fourreau (28) tubulaire disposé autour de l'extrémité avant du porte-barillet et monté coulissant suivant l'axe longitudinal de la fiche, ainsi qu'un ressort (29) disposé entre le porte-barillet et le fourreau et tendant à repousser le fourreau vers l'avant, dans une position où il couvre le barillet (9).

5. Connecteur pour câble à fibres optiques selon la revendication 4, caractérisé en ce que le raccord d'accouplement (2) est équipé d'une butée (30) repoussant le fourreau (28) pour qu'il découvre le barillet (9) lorsque la connexion est établie.

6. Connecteur pour câble à fibres optiques selon l'une quelconque des revendications 1 ou 5, caractérisé en ce que le barillet (9) s'appuie sur le porte-barillet (8) par une rondelle élastique (33).

7. Connecteur pour câble à fibres optiques selon l'une quelconque des revendications 1 à 6, caractérisé en ce qu'il comprend en outre une pièce destinée à être manipulée (10) disposée autour du porte-barillet, mobile en translation par rapport au porte-barillet suivant l'axe de fiche, des moyens de postionnement angulaire (20, 25) entre le raccord d'accouplement et le porte-barillet destinés à empêcher le porte-barillet de tourner par rapport au raccord d'accouplement autour de l'axe de fiche ; des surfaces de butée sur le porte-barillet et le raccord d'accouplement suivant l'axe de fiche, un moyen de liaison (16, 17, 19) entre la pièce manipulée et le porte-barillet pour empêcher la rotation de la pièce manipulée autour de l'axe de fiche lorsque la connexion n'est pas établie et pour autoriser cette rotation lorsqe la connexion s'établit, et des moyens de verrouillage à baïonnette conjointement disposés sur la pièce manipulée et le raccord d'accouplement et respectivement constitués de tenons (15) et de rainures (22) ainsi que d'un ressort (26) disposé entre le porte-barillet et la pièce manipulée et tendant à déplacer la pièce manipulée suivant l'axe de fiche en l'éloignant du barillet (9).

8. Connecteur pour câble à fibres optiques selon la revendication 7, caractérisé en ce que les moyens de positionnement angulaire consistent respectivement en un doigt et un perçage complémentaire.

9. Connecteur pour câble à fibres optiques selon l'une quelconque des revendications 7 ou 8, caractérisé en ce que le moyen de liaison entre la pièce manipulée et le porte-barillet consiste en une clavette (19) et une rainure (16) orientée suivant l'axe de fiche et débouchant sur une gorge circonférentielle (17).

10. Connecteur pour câble à fibres optiques selon l'une quelconque des revendications 7 à 9, caractérisé en ce que les rainures de verrouillage (22) comprennent une première partie (80, 81) débouchant sur le bord du raccord d'accouplement par lequel le porte-barillet est introduit et s'étendant depuis ce bord dans une direction correspondant sensiblement à l'axe de fiche, une deuxième partie (83, 84) s'étendant dans une direction sensiblement perpendiculaire à la première partie, et qui comporte un creux d'encliquetage, et un creux de reprise (82) joignant les deux parties, les creux de reprise et d'encliquetage s'étendant vers le bord du raccord d'accouplement.

## Patentansprüche

1. Verbinder für Glasfaserenden, zusammengesetzt aus einem Stecker (6), der zur Befestigung am Ende des genannten Kabels (12) bestimmt ist, und einem Koppelanschluß (2) umfassend eine Buchse (3), wobei der Stecker (6) bei Einrichten einer Verbindung zum Einführen in die Buchse (3) bestimmt ist, wobei der Stecker umfaßt:
- eine Trommel (9), an der die Glasfasern (56) des genannten Kabels (12) mit ihren Enden anliegen sollen;
- einen im allgemeinen rohrförmigen Trommelhalter (8), der einen längsausgedehnten Innenraum umfaßt, der sich an der Vorderseite auf eine Fassung zum Aufnehmen der Trommel öffnet , wobei die genannte Trommel (9) in die Fassung durch die Vorderseite des Trommelhalters so eingeführt werden kann, daß sie mit ihrer Rückseite am Trommelhalter anliegt; wobei der genannte Stecker in die Buchse des Anschlußkopplers über die Vorderseite des genannten Trommelhalters einführbar ist;
- ein Gleitstück (45), versehen mit Mitteln (58, 60) zur Befestigung von Trägern (48, 49), Zugelementen des genannten optischen Kabels (12), das die Glasfasern umfaßt, wobei das Gleitstück (45) dafür vorgesehen ist, im längsausgedehnten Innenraum in Längsrichtung verschiebbar angebracht und in den genannten Innenraum durch die Rückseite des Trommelhalters (8) einführbar zu sein,
- Mitteln, die es ermöglichen, das Gleitstück (45) und den Trommelhalter (8) nach einer Verschiebung des Gleitstücks (45) zur Vorderseite des Trommelhalters (8) in Anschlag zu bringen;
- und ein Mittel zum Blockieren des Gleitstücks (45) im Trommelhalter (8), wenn das Gleitstück (45) und der Trommelhalter (8) in Anschlag sind;
dadurch **gekennzeichnet**, daß die Mittel, um das Gleitstück (45) und den Trommelhalter (8) in Anschlag zu bringen, so angeordnet sind, daß der Anschlag veränderlicher Position ist und er es somit ermöglicht, das Gleitstück in eine erste, vordere Längsposition , in der die Enden der Glasfasern aus dem Trommelhalter nach vorne vorstehen, und in eine zweite, von der ersten zurückgesetzte Längsposition zu bringen, in der die Glasfasern zurückgezogen sind und die Trommel (9) in ihre Fassung mitnehmen, und dadurch, daß das Blockiermittel zur Wirkung vorgesehen ist, wenn das Gleitstück in der genannten zweiten, zurückgesetzten Anschlagposition ist.

2. Verbinder für Glasfaserkabel nach Anspruch 1, dadurch gekennzeichnet, daß die Mittel zum In-Anschlag-bringen aus einer Mutter (64), die über ein Gewinde entweder auf dem Gleitstück (45) oder auf dem Trommelhalter (8) eingeführt ist, und einem Ansatz (66) bestehen, der entweder auf dem Trommelhalter (8) oder auf dem Gleitstück (45) eingerichtet ist und der auf der Mutter (64) zum Anschlag kommt, wobei die Mutter mit Mitteln (67) versehen ist, die es erlauben, sie mit einem von der Rückseite des Trommelhalters eingeführten Werkzeug zu drehen.

3. Verbinder für Glasfaserkabel nach einem der Ansprüche 1 oder 2, dadurch gekennzeichnet, daß die mit dem Gleitstück fest verbundenen Mittel zur Befestigung der Träger (49) des optischen Kabels (12) aus einem Verbindungssystem gebildet sind, das sich aus zwei zueinander beweglichen Teilen (58, 60) zusammensetzt, die mit konischen Oberflächen zum Verklemmen ausgestattet sind.

4. Verbinder für Glasfaserkabel nach einem der Ansprüche 1 bis 3, dadurch gekennzeichnet, daß der Stecker weiterhin eine rohrförmige Hülse (28), die um das Ende vor dem Trommelhalter angeordnet und entlang der Längsachse des Steckers gleitend angebracht ist, sowie eine Feder (29) umfaßt, die zwischen dem Trommelhalter und der Hülse angeordnet ist und die die Hülse nach vorne in die Position zu drücken sucht, wo sie die Trommel abdeckt.

5. Verbinder für Glasfaserkabel nach Anspruch 4, dadurch gekennzeichnet, daß der Koppelanschluß (2) mit einem Anschlag (30) ausgerüstet ist, der die Hülse (28) zurückschiebt , damit sie die Trommel (9) abdeckt, wenn die Verbindung eingerichtet ist.

6. Verbinder für Glasfaserkabel nach einem der Ansprüche 1 oder 5, dadurch gekennzeichnet, daß die Trommel (9) über eine elastische Beilagscheibe am Trommelhalter (8) anliegt.

7. Verbinder für Glasfaserkabel nach einem der Ansprüche 1 bis 6, dadurch gekennzeichnet, daß er weiterhin ein Manipulationsstück (10) umfaßt, das um den Trommelhalter angeordnet und bezüglich dem Trommelhalter entlang der Steckerachse translationsbeweglich ist, Mittel (20, 25) zum Winkelpositionieren zwischen dem Koppelanschluß und dem Trommelhalter, die dazu bestimmt sind, den Trommelhalter an Drehung bezüglich dem Koppelanschluß um die Steckerachse zu hindern; Anschlagoberflächen auf den Trommelhalter und dem Koppelanschluß entsprechend der Steckerachse, ein Mittel (16, 17, 19) zur Verbindung zwischen dem Manipulationsstück und dem Trommelhalter, um Rotation des Manipulationsstücks um die Steckerachse zu verhindern, wenn die Verbindung nicht eingerichtet ist und diese Rotation zu erlauben, wenn sich die Verbindung einstellt, und Bajonett-Verriegelungsmittel, die gepaart um das Manipulationsstück und den Koppelanschuß angeordnet und jeweils aus Stiften (15) und Nuten (22) sowie einer Feder (26) gebildet sind, die zwischen dem Trommelhalter und dem Manipulationsstück angeordnet ist und die das Manipulationsstück entlang der Steckerachse, es von der Trommel (9) entfernend zu verschieben sucht.

8. Verbinder für Glasfaserkabel nach Anspruch 7, dadurch gekennzeichnet, daß die Mittel zur Winkelpositionierung jeweils aus einem Finger und einer komplementären Bohrung bestehen.

9. Verbinder für Glasfaserkabel nach einem der Ansprüche 7 oder 8, dadurch gekennzeichnet, daß das Mittel zur Verbindung zwischen dem Manipulationsstück und dem Trommelhalter aus einem Keil (19) und einer Nut (16) besteht, die entlang der Steckerachse orientiert ist und sich auf eine umlaufende Kehle (17) öffnet.

10. Verbinder für Glasfaserkabel nach einem der Ansprüche 7 bis 9, dadurch gekennzeichnet, daß die Verriegelungsnuten (22) einen ersten Teil (80, 81), der sich auf den Rand des Koppelanschlusses öffnet, durch den der Trommelhalter eingeführt ist, und von diesem Rand in einer im wesentlichen der Steckerachse entsprechenden Richtung verläuft, einen zweiten Teil (83, 84), der in einer zum ersten Teil im wesentlichen senkrechten Richtung verläuft, und eine Sperrvertiefung und eine Aufnahmevertiefung (82) umfassen, die die beiden Teile verbindet, wobei sich die Aufnahme- und die Sperrvertiefung sich zum Rand des Anschlusskopplers hin erstrecken.

## Claims

1. Connector for an optical fibre cable end, of the type having a plug (6) to be fixed to the end of said cable (12) and a coupling (2) having a sleeve (3), the plug (6) being engaged in the sleeve (3) when a connection is established, the plug having a drum (9) to which the ends of the optical fibres (56) of said cable (12) lead, a generally tubular drum holder (8) enveloping an inner longitudinal space issuing at its front on a recess for receiving the drum (9), the latter being introduceable into the recess by the front of the drum holder so that its rear bears on the drum holder, said plug being engageable in the sleeve of the coupling by means of the front of said drum holder, a slide (45) having attachment means (58, 60) of the tension element carriers (48, 49) of the optical cable (12) containing the optical fibres (56), the slide (45) being longitudinally displaceable in the inner longitudinal space and introduceable into the latter by the rear of the drum holder (8), means making it possible to abut the slide (45) and the drum holder (8) at the end of a forward displacement of the slide (45) in the drum holder (8) and a means for locking the slide (45) in the drum holder (8) when the slide (45) and the drum holder (8) are in abutment, characterized in that the means for bringing about abutment between the slide (45) and the drum holder (8) are arranged in such a way that there is a variable position abutment and consequently it is possible to bring the slide respectively into a first, longitudinal, advanced position in which the ends of the optical fibres pass out of the drum holder at the front and a second, longitudinal position set back compared with the first, in which the optical fibres are pulled rearwards and bring the drum (9) into its recess, and in that the locking means acts when the slide is in said second, retracted, abutment position.

2. Connector for optical fibre cable according to claim 1, characterized in that the abutment means are constituted by a nut (64) engaged by threading either on the slide (45), or on the drum holder (8), and a shoulder (66) either on the drum holder (8) or on the slide (45) and which abuts against the nut (64), the nut having means (67) enabling its rotation by a tool introduced from the rear of the drum holder.

3. Connector for optical fibre cable according to either of the claim 1 or 2, characterized in that the attachment means of the carriers (49) of the optical cable (12) integral with the slide are constituted by an attachment system constituted by two mutually mobile parts (58, 60) provided with conical jamming surfaces.

4. Connector for optical fibre cable according to any one of the claims 1 to 3, characterized in that the plug also comprises a tubular sleeve (28) arranged around the front end of the drum holder and mounted so as to slide along the longitudinal axis of the plug, as well as a spring (29) located between the drum holder and the sleeve and which moves the sleeve forwards into a position where it covers the drum (9).

5. Connector for optical fibre cable according to claim 4, characterized in that the coupling (2) is equipped with an abutment (30) displacing the sleeve (28) in such a way that it uncovers the drum (9) when the connection is established.

6. Connector for optical fibre cable according to either of the claims 1 or 5, characterized in that the drum (9) bears on the drum holder (8) by means of an elastic washer (33).

7. Connector for optical fibre cable according to any one of the claims 1 to 6, characterized in that it also comprises a part (10) which is to be manipulated and arranged around the drum holder, mobile in translation with respect to the drum holder along the axis of the plug, angular positioning means (20, 25) between the coupling and the drum holder for preventing the latter from turning with respect to the coupling about the plug axis, abutment surfaces on the drum holder and the coupling along the plug axis, a connecting means (16, 17, 19) between the manipulated part and the drum holder for preventing the rotation of the manipulated part around the plug axis when the connection is not established and for authorizing said rotation when the connection is established, and bayonet locking means jointly located on the manipulated part and the coupling and respectively constituted by lugs (15) and grooves (22), as well as a spring (26) positioned between the drum holder and the manipulated part and displacing the manipulated part along the plug axis whilst moving it away from the drum (9).

8. Connector for optical fibre cable according to claim 7, characterized in that the angular positioning means respectively consist of a finger and a complimentary opening.

9. Connector for optical fibre cable according to either of the claims 7 or 8, characterized in that the connecting means between the manipulated part and the drum holder is constituted by a wedge (19) and a groove (16) oriented in accordance with the plug axis and issuing onto a circumferential slot (17).

10. Connector for optical fibre cable according to any one of the claims 7 to 9, characterized in that the locking grooves (22) comprise a first portion (80, 81) issuing onto the edge of the coupling by which the drum holder is introduced and extending from said edge in a direction substantially corresponding to the plug axis, a second portion (83, 84) extending in a direction substantially perpendicular to the first portion and which has a detent cavity and a take-up cavity (82) joining the said two portions, the take-up and detent cavities extending towards the edge of the coupling.
